(19) Europäisches Patentamt
European Patent Office
Office européen des brevets

(11) **EP 4 787 986 A1**

(12) **EUROPEAN PATENT APPLICATION**

(43) Date of publication:
**05.08.2026 Bulletin 2026/32**

(51) International Patent Classification (IPC):
*H04W 56/00* (2009.01)

(21) Application number: 25155701.3

(22) Date of filing: **04.02.2025**

(52) Cooperative Patent Classification (CPC):
**H04W 56/001**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Rohde & Schwarz GmbH & Co. KG 81671 München (DE)**

(72) Inventors:
• **Hausl, Dr.-Ing. Christoph**
**85579 Neubiberg (DE)**
• **Emmert, Julian**
**82041 Deisenhofen (DE)**
• **Tomic, Gregor**
**85567 Grafing bei München (DE)**

(74) Representative: **Rupp, Christian**
**Mitscherlich PartmbB**
**Karlstraße 7**
**80333 München (DE)**

(54) **MOVABLE TEST DEVICE AND METHOD FOR TESTING SYNCHRONIZATION WITH RESPECT TO A BASE STATION, CORRESPONDING VEHICLE AND SYSTEM COMPRISING SUCH TEST DEVICES**

(57)     A movable test device (10) is provided for testing, especially during movement, of the synchronization of a base station (11, 15, 21, 31a, 31b, 31c, 31d, 41a, 41b) of a wireless network with reference to a reference time.

The movable test device (10) may comprise a receiving unit (12) configured to measure a time of arrival for a synchronization and/or broadcast channel of the base station (11, 15), a location determination unit (13) configured to determine a measurement location of the movable test device (10), and configured to determine a base station location of the base station (11, 15) based on multilateration or based on a base station location database, a processing unit (14) connected to the receiving unit (12) and to the location determination unit (13), wherein the processing unit (14) is configured to determine a propagation time based on a distance between the base station location and the measurement location, determine a time of transmission based on the time of arrival and the propagation time, evaluate frame-timing, especially with respect to a reference time, based on the time of transmission, preferably with the aid of a model, and determine time-offset and/or drift of frame-start-times of the base station (11, 15) based on the frame-timing or based on the time of arrival, especially by solving a corresponding optimization problem.

Fig. 1

EP 4 787 986 A1

**Description**

The invention relates to a movable test device for testing, especially during movement, of the synchronization of a base station of a wireless network with reference to a reference time, a vehicle comprising such a movable test device, a system comprising at least one such movable test devices, and a method for testing synchronization with respect to a base station of a wireless network with the aid of a movable test device, especially during movement.

Generally, in times of an increasing number of communication applications providing wireless connectivity capabilities and using base stations, and the associated necessity with regard to such base stations to fulfill certain synchronization requirements, there is a growing need of a movable test device for testing, especially during movement of the test device, of the synchronization of a base station of a wireless network with reference to a reference time, a vehicle comprising such a movable test device, a system comprising at least one such movable test devices, and a method for testing synchronization with respect to a base station of a wireless network with the aid of a movable test device, especially during movement, in order to verify correct functioning or synchronization, respectively, of such base stations in a particularly fast and efficient manner.

Disadvantageously, common measurement equipment leads to slow measurements or several inefficiencies, respectively, exemplarily due to the fact that such measurement equipment typically has to be stationary, for example, to avoid disturbance or the like.

For instance, US 2023/0073766 Al discloses a network measurement device which includes a display control unit that displays location information stored in a location information table and a setting control unit that sets the location information selected from the displayed location information as positioning start location information of a moving destination, and has a configuration of, after setting the positioning start location information, executing positioning at the moving destination based on reception signal information from a Global Navigation Satellite System (GNSS) and measuring a time synchronization error between reference time information acquired from the GNSS and reference time information under test used by an apparatus in a location of the moving destination by comparing the reference time information and the reference time information under test.

Accordingly, there is the object to provide a movable test device for testing, especially during movement, of the synchronization of a base station of a wireless network with reference to a reference time a vehicle comprising such a movable test device, a system comprising at least one such movable test devices, and a method for testing synchronization with respect to a base station of a wireless network with the aid of a movable test device, especially during movement, thereby ensuring a particularly fast and efficient testing.

This object is solved by the features of the first independent claim for a movable test device for testing, especially during movement of the test device, of the synchronization of a (stationary) base station of a wireless network with reference to a reference time t, the features of the second independent claim for a vehicle comprising such a movable test device, the features of the third independent claim for a system comprising at least one such movable test devices, and the features of the fourth independent claim for a method for testing synchronization with respect to a base station of a wireless network with the aid of a movable test device, especially during movement. The dependent claims contain further developments.

According to a first aspect of the invention, a movable test device for testing, especially during movement, of the synchronization of a base station of a wireless network with reference to a reference time, is provided.

The reference time may be the GNSS (Global Navigation Satellite System) time. Also other reference times may be used such as e.g.:

- Coordinated Universal Time (UTC)
- Network Time Protocol (NTP)
- Precision Time Protocol (PTP)
- LORAN (Long Range Navigation)
- Radio Clocks
- Atomic Clocks

The movable test device comprises a receiving unit (RU) configured to measure a time of arrival for a synchronization and/or broadcast channel of the base station, a location determination unit (LDU) configured to determine a measurement location of the movable test device, and configured to determine a base station location of the base station based on multilateration or based on a base station location database, a processing unit (PU) connected to the receiving unit and to the location determination unit. The processing unit is configured to determine a propagation time based on a distance between the base station location and the measurement location, to determine a time of transmission based on the time of arrival and the propagation time, to evaluate frame-timing, especially with respect to a reference time, based on the time of transmission, preferably with the aid of a model, and to determine time-offset and/or drift of frame-start-times of the base station based on the frame-timing or based on the time of arrival, especially by solving a corresponding optimization problem.

Advantageously, a particularly fast and efficient testing can be ensured.

According to an implementation form of the first aspect of the invention, the movable test device is configured for testing synchronization between at least two base stations of the wireless network, especially simultaneously to testing the synchronization with respect to the base station of the wireless network with regard to said reference time.

Advantageously, for instance, speed of testing can further be increased.

The multilateration can be used to estimate the position of a base station from the time of arrival measurements whereas knowledge about the transmission periodicity is exploited. The multilateration typically is done separately for each base station to be tested.

In addition to this or as an alternative, the location determination unit is configured to store the base station location database and/or to retrieve the base station location database, especially from a remote storage, preferably a cloud storage.

Advantageously, for example, the base station location database can be updated in a particularly efficient manner, thereby exemplarily ensuring that the corresponding data is correct.

According to an implementation form of the first aspect of the invention, the receiving unit is configured to determine a base station identifier with respect to the base station, especially based on the synchronization and/or broadcast channel of the base station. In addition to this or as an alternative, the base station location database comprises or is a look-up table, especially comprising at least one base station identifier and its respectively corresponding base station location.

Advantageously, for instance, efficiency can further be increased.

According to an implementation form of the first aspect of the invention, especially for measuring the time of arrival, the receiving unit is configured to receive IQ samples, especially from the base station, and to search for synchronization and/or broadcast channel signals, especially periodically repeated synchronization and/or broadcast channel signals, in the correspondingly received IQ samples.

Advantageously, for example, inefficiencies can further be reduced.

According to an implementation form of the first aspect of the invention, for determining the time of transmission, the processing unit is configured to subtract the propagation time from the time of arrival.

Advantageously, for instance, complexity can be reduced, thereby increasing not only speed of testing but also efficiency.

According to an implementation form of the first aspect of the invention, for the evaluation of the frame-timing and to estimate the time offset and drift of the frame-start-times of the cell with respect to the reference time or to another time which is available at the receiver, an optimization may be used using at least one of a least squares model, a linear regression model, an iterative gradient model, a machine-learning model, or any combination thereof.

Advantageously, for example, efficiency can further be increased.

According to an implementation form of the first aspect of the invention, the processing unit is configured to determine a frequency error and/or timing error of the base station based on the time-offset and/or the drift of the frame-start-times of the base station.

Advantageously, for instance, frequency or timing error, respectively, can efficiently be measured for all installed base stations in a certain area. Further advantageously, a motion or drive, respectively, through this area is sufficient, thereby omitting any stops for performing a stationary measurement.

According to an implementation form of the first aspect of the invention, the location determination unit is configured to determine the measurement location with the aid of Global Navigation Satellite System, GNSS. In addition to this or as an alternative, the reference time comprises or is GNSS time.

Advantageously, for example, efficiency can further be increased.

According to an implementation form of the first aspect of the invention, the receiving unit is configured to measure an angle of arrival, especially with respect to the base station, preferably to support determining the base station location.

Advantageously, for instance, accuracy can further be increased.

According to an implementation form of the first aspect of the invention, the processing unit is configured to sort the correspondingly measured time of arrival out if said correspondingly measured time of arrival is likely to be influenced and/or created by reflections.

Advantageously, for example, measurement errors can further be reduced.

According to an implementation form of the first aspect of the invention, the receiving unit and/or the processing unit is configured to split all corresponding measurements with respect to the base station into several clusters, wherein respective time-offset and/or drift is determined separately for each of said several clusters, especially wherein a respectively new cluster starts after a certain time gap between corresponding measurements or in case that the receiving unit and/or processing unit detects a certain change of the corresponding time-offset and/or drift.

Advantageously, for instance, efficiency can further be increased.

According to a second aspect of the invention, a vehicle, especially flying vehicle, is provided. Said vehicle comprises a movable test device according to the first aspect of the invention or any of its implementation forms, respectively.

Advantageously, a particularly fast and efficient testing can be ensured.

According to a third aspect of the invention, a system is provided. Said system comprises at least one movable test devices according to the first aspect of the invention or any of its implementation forms, respectively, and especially a combining unit configured to combine respective measurements and/or measurement results from the at least two movable test devices in post-processing and/or real time.

Advantageously, a particularly fast and efficient testing can be ensured.

According to a fourth aspect of the invention, a method for testing synchronization with respect to a base station of a wireless network with the aid of a movable test device, especially during movement, is provided. The method comprises the steps of measuring a time of arrival for a synchronization and/or broadcast channel of the base station, determining a measurement location of the movable test device, determining a base station location of the base station based on multilateration or based on a base station location database, determining a propagation time based on a distance between the base station location and the measurement location, determining a time of transmission based on the time of arrival and the propagation time, evaluating frame-timing, especially with respect to a reference time, based on the time of transmission, preferably with the aid of a model, and determining time-offset and/or drift of frame-start-times of the base station based on the frame-timing or based on the time of arrival, especially by solving a corresponding optimization problem. Advantageously, a particularly fast and efficient testing can be ensured.

It is noted that the implementation forms of the first aspect of the invention can analogously apply to the fourth aspect of the invention.

Exemplary embodiments of the invention are now further explained with respect to the drawings by way of example only, and not for limitation. In the drawings:

Fig. 1 shows an exemplary embodiment of a movable test device for testing synchronization with respect to a base station of a wireless network, especially during movement;

Fig. 2 shows a further exemplary embodiment of a movable test device, thereby especially elucidating functioning of said movable test device;

Fig. 3 shows an exemplary embodiment of a vehicle comprising a movable test device, such as the device of Fig. 1 or Fig. 2, respectively;

Fig. 4 shows an exemplary embodiment of a system comprising multiple movable test devices, such as the devices of Fig. 1 or Fig. 2, respectively; and

Fig. 5 shows a flow chart of an exemplary embodiment of a method for testing synchronization with respect to a base station of a wireless network with the aid of a movable test device, especially during movement.

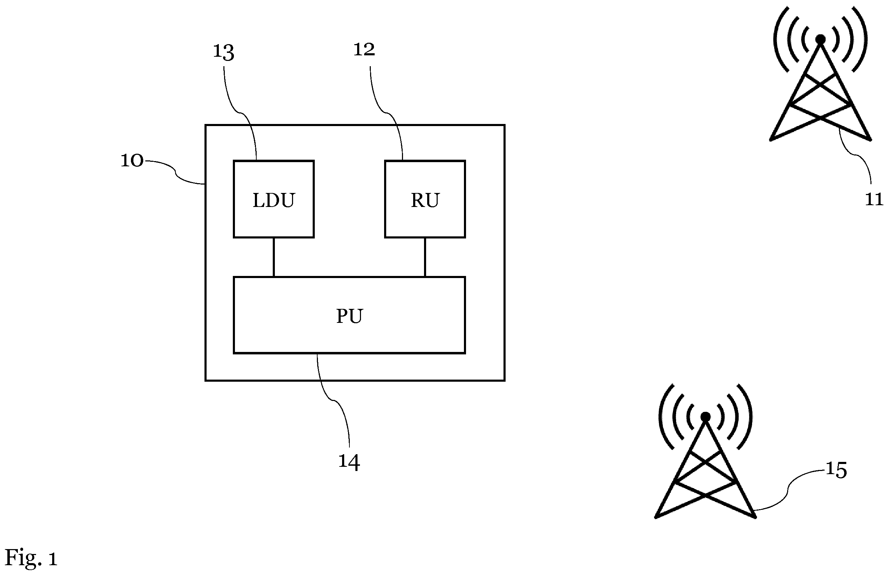

Fig. 1 illustrates an exemplary embodiment of a movable test device 10 for testing synchronization with respect to a base station 11 of a wireless network, especially during movement of the movable test device 10.

In accordance with said Fig. 1, the movable test device 10 comprises:

- a receiving unit RU 12 configured to measure a time of arrival for a synchronization and/or broadcast channel of the base station 11,
- a location determination unit LDU 13 configured to determine a measurement location of the movable test device 10, and configured to determine a base station location of the base station 11 based on multilateration or based on a base station location database, and
- a processing unit PU 14 connected to the receiving unit 12 and to the location determination unit 13.

In this context, the processing unit 14 is configured to determine a propagation time based on a distance between the base station location and the measurement location. Furthermore, the processing unit 14 is configured to determine a time of transmission based on the time of arrival and the propagation time. Moreover, the processing unit 14 is configured to evaluate frame-timing, especially with respect to a reference time, based on the time of transmission, preferably with the aid of a model. In addition to this, the processing unit 14 is configured to determine time-offset and/or drift of frame-start-times of the base station based on the frame-timing or based on the time of arrival, especially by solving a corresponding optimization problem.

Furthermore, especially in the context of measuring the time of arrival, preferably for the corresponding synchronization and/or broadcast channel signals, the receiving unit 12 and/or the processing unit 14 can be configured to determine a corresponding equivalent frame start time. For instance, for 5G Next Generation (5GNR) or Long Term Evolution (LTE), respectively, base stations, the corresponding frame duration typically is 10 milliseconds.

It is noted that it might be particularly advantageous if the movable test device 10 is configured for testing synchronization with respect to at least one further base station, exemplarily the further base station 15, of the wireless network, especially simultaneously to testing the synchronization with respect to the base station 11 of the wireless network.

Accordingly, it might be particularly advantageous if the receiving unit 12 is configured to measure a respective time of arrival for a corresponding synchronization and/or broadcast channel of the base station and the at least one further base station, especially in a simultaneous and/or parallel manner.

Furthermore, it might be particularly advantageous if the location determination unit 13 is configured to determine a measurement location of the movable test device 10, and to determine a respective base station location of the base station and the at least one further base station based on multilateration or based on a base station location database, especially in a simultaneous and/or parallel manner.

Moreover, it might be particularly advantageous if the processing unit 14 is configured to determine a respective propagation time based on a corresponding distance between each of the base station locations and the measurement location, to determine a respective time of transmission based on the corresponding times of arrival and the corresponding propagation times, to evaluate respective frame-timing, especially with respect to a reference time, based on the corresponding times of transmission, preferably with the aid of a model, and to determine respective time-offset and/or drift of frame-start-times of the base station and the at least one further base station based on the corresponding frame-timings or based on the corresponding times of arrival, especially by solving a corresponding optimization problem, preferably in a simultaneous and/or parallel manner.

With respect to the above-mentioned base station 11 or the at least one further base station, exemplarily the further base station 15, respectively, it is noted that such a base station can also be understood as a cell of the wireless network.

It is further noted that the following explanations can analogously apply for the case that the movable test device 10 is also configured for testing synchronization with respect to at least one further base station, exemplarily the further base station 15, of the wireless network, especially in a simultaneous and/or parallel manner.

With respect to the above-mentioned multilateration, it is noted that it might be particularly advantageous if the multilateration is based on further base stations or based on further base stations and the movable test device 10.

It is further noted that the location determination unit 13 can be configured to determine the geographic cell position or the base station location from all available time of arrival measurements and its corresponding measurement locations with the multilateration, especially wherein knowledge about the corresponding transmission periodicity can be exploited.

With respect to the location determination unit 13, it is noted that it might be particularly advantageous if the location determination unit 13 is configured to store the base station location database and/or to retrieve the base station location database, especially from a remote storage such as a cloud storage.

With respect to the receiving unit 12, it is noted that it might be particularly advantageous if the receiving unit 12 is configured to determine a base station identifier with respect to the base station 11, especially based on the synchronization and/or broadcast channel of the base station 11.

It is further noted that the receiving unit 12 and/or the location determination unit 13 can be configured to demodulate the corresponding cell identity or the base station identifier, respectively, from broadcasted system information or the synchronization and/or broadcast channel, respectively, and to look in the base station location database for the geographic cell position or the base station location, respectively.

With respect to the base station location database, it is noted that it might be particularly advantageous if the base station location database comprises or is a look-up table, especially comprising at least one base station identifier and its respectively corresponding base station location.

For instance, in the exemplary case according to Fig. 1, such a look-up table can comprise a first base station identifier with respect to the base station 11 and the corresponding base station location of said base station 11, and a second base station identifier with respect to the further base station 15 and the corresponding base station location of said further base station 15.

It is noted that if the base station location database comprises several entries for the demodulated cell identity or the determined base station identifier, respectively, the receiving unit 12 and/or the location determination unit 13 can be configured to choose the location which is closest to the measurement location where the maximum receive power for this cell or base station, respectively, was detected.

Especially as soon as an accurate enough base station location is available, the processing unit 14 can determine the corresponding propagation time for each time of arrival (ToA) measurement $T_{ToA,i}$ by calculating the distance $d_i$ between base station and measurement location. This especially allows to calculate the corresponding time of transmission (ToT) $T_{ToT,i}$ from the ToA measurements: $T_{ToT,i} = T_{ToA,i} - \frac{d_i}{c}$, wherein c denotes speed of light.

Furthermore, especially for measuring the time of arrival, the receiving unit 12 can be configured to receive IQ samples, exemplarily from the base station 11, and to search for synchronization and/or broadcast channel signals, especially periodically repeated synchronization and/or broadcast channel signals, in the correspondingly received IQ samples.

Moreover, the receiving unit 12 can be configured to detect base stations or cells, respectively, by searching for synchronization and/or broadcast channel signals, especially periodically repeated synchronization and/or broadcast channel signals, in the received IQ samples.

For example, the receiving unit 12 can search for SSBs (Synchronization Signal/Physical Broadcast Channel (PBCH) Blocks) of 5GNR (5G Next Generation) cells or base stations, respectively, which are typically transmitted every 20 milliseconds.

As indicated above, it might be particularly advantageous if, for determining the time of transmission, the processing unit 14 is configured to subtract the propagation time from the time of arrival.

Advantageously, a changing distance between the base station 11 and the movable test device 10 can efficiently be compensated.

With respect to the above-mentioned model, it is noted that it might be particularly advantageous if the model comprises or is at least one of a least squares model, a linear regression model, an iterative gradient model, a machine-learning model, or any combination thereof.

Especially as indicated above, the processing unit 14 can use such a model for the evaluation of the corresponding frame-timing and to determine the time-offset and/or drift of the corresponding frame-start-times of the cell or base station 11, respectively, especially with respect to the reference time or to another time which is available at the movable test device 10 or the processing unit 14, respectively.

Furthermore, it might be particularly advantageous if the processing unit 14 is configured to determine a frequency error and/or timing error of the base station based on the time-offset and/or the drift of the frame-start-times of the base station.

For instance, especially in the context of 5GNR and/or LTE standards or base stations, respectively, the drift can preferably be equivalent to the frequency error.

Moreover, especially as an alternative and as indicated above, by the processing unit 14, the time-offset and/or drift can be determined jointly with the geographic cell position or the base station location, respectively, from the ToA measurements, preferably wherein the processing unit 14 is configured to solve the corresponding optimization problem, wherein the time-offset, drift and base station location are treated as unknowns.

With respect to the location determination unit 13, it is noted that it might be particularly advantageous if the location determination unit 13 is configured to determine the measurement location with the aid of Global Navigation Satellite System, GNSS.

With respect to the above-mentioned reference time, it is noted that it might be particularly advantageous if the reference time comprises or is GNSS time.

With respect to the receiving unit 12, it is noted that it might be particularly advantageous if the receiving unit 12 is configured to measure an angle of arrival, especially with respect to the base station, preferably to support determining the base station location. Advantageously, the above-mentioned multilateration can comprise or be hybrid multilateration and/or triangulation.

With respect to the processing unit 14, it is noted that it might be particularly advantageous if the processing unit 14 is configured to sort the correspondingly measured time of arrival out if said correspondingly measured time of arrival is likely to be influenced and/or created by reflections.

Accordingly, the processing unit 14 can sort out ToA measurements which seemed to occur due to reflections. Advantageously, this helps to increase the accuracy, because especially line of sight measurements are valuable for testing synchronization.

It is further noted that it might be particularly advantageous if the receiving unit 12 and/or the processing unit 14 is configured to split all corresponding measurements with respect to the base station 11 into several clusters, wherein respective time-offset and/or drift is determined separately for each of said several clusters, especially wherein a respectively new cluster starts after a certain time gap between corresponding measurements or in case that the receiving unit 12 and/or processing unit 14 detects a certain change of the corresponding time-offset and/or drift.

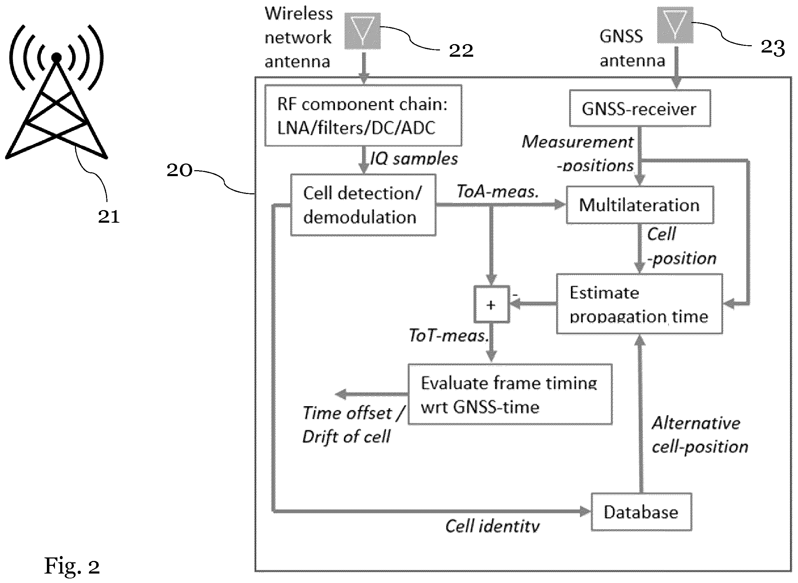

Now, with respect to Fig. 2, a further exemplary embodiment of a movable test device 20 for testing synchronization with respect to a base station 21 or cell, respectively, of a wireless network, especially during movement, is depicted.

Said movable test device 20 exemplarily comprises a first antenna 22, exemplarily a wireless network antenna, and a second antenna 23, exemplarily a GNSS antenna.

It is noted that such a first antenna 22 may be connected to the above-mentioned receiving unit 12 of Fig. 1, and/or such a second antenna 23 may be connected to the location determination unit 13.

As it can be seen from Fig. 2, the first antenna 22 is connected to a radio frequency (RF) component chain, and the second antenna 23 is connected to a GNSS receiver. Said RF component chain can comprise at least one of a low noise amplifier (LNA), filters, a mixer, especially downconversion (DC), an analog-to-digital converter (ADC), or any combination thereof.

It is noted that the receiving unit 12 of Fig. 1 may comprise such a RF component chain, and/or the location determination unit 13 may comprise or be such a GNSS receiver.

With the aid of the first antenna 22 and the RF component chain, IQ samples are received, especially from the cell 21.

Furthermore, the movable test device 20 exemplarily detects cells by searching for (periodically repeated) synchronization and/or broadcast channel signals in the received IQ samples.

Moreover, the movable test device 20 exemplarily measures the ToA for the synchronization and/or broadcast channel signals, especially after demodulation.

The GNSS receiver exemplarily determines the measurement position or measurement location, respectively, of the movable test device 20.

Furthermore, the movable test device 20 exemplarily determines the geographic cell position from all available ToA measurements and its corresponding measurement positions with the aid of multilateration, especially wherein knowledge about the corresponding transmission periodicity can be exploited.

Alternatively, the movable test device 20 exemplarily demodulates the cell identity from the broadcasted system information and looks in a database for the geographic cell position.

If the database contains several entries for the demodulated cell identity, the movable test device 20 exemplarily chooses the position which is closest to the measurement position where the maximum receive power for this cell was detected.

If the database position is available, its advantage in comparison to the multilateration determination is a smaller error for the cell position determination and lower requirements for a corresponding drive route. It is noted that ToA multilateration achieves a low positioning error especially or only for drive routes with many curves.

As soon as an accurate enough determination for the cell position is available, the movable test device 20 determines the propagation time for each ToA measurement $T_{ToA,i}$ by calculating the distance $d_i$ between cell and measurement position. Especially as described above, this allows to calculate the Time of Transmission (ToT) $T_{ToT,i}$ from the ToA-measurements :

$$T_{ToT,i} = T_{ToA,i} - \frac{d_i}{c} .$$

After this, the changing distance between base station and movable test device 20 is exemplarily compensated. This exemplarily allows the movable test device 20 to use a model or optimization model, respectively, such as a least squares model, a linear regression model, an iterative gradient model, a machine-learning model, or any combination thereof, for the evaluation of the frame-timing and to estimate the time-offset and/or drift of the frame-start-times of the cell with respect to the GNSS-time or to another time which is available at the movable test device 20. This drift can especially be equivalent to the frequency error, for instance, because the 5GNR and LTE standards require that the same source should be used for RF frequency and data clock generation. Accordingly, the base station 21 may especially comprise or be a 5GNR and/or LTE base station, which can analogously apply for the base station 11 or 15, respectively, according to Fig. 1.

Alternatively, the time-offset and/or drift can be determined jointly with the geographic cell position from the ToA measurements. This may especially require to solve an optimization problem where time-offset, drift and cell position are treated as unknowns.

It is noted that the movable test device 20 can also make Angle of Arrival determinations in order to support the determination of the cell position (hybrid multilateration/triangulation) .

Furthermore, the movable test device 20 can split all measurements for a cell into several cluster whereas time offset and drift is estimated separately for each cluster. A new cluster starts after a long time gap between measurements or in case that the receiver detected a significant change of the time-offset and/or drift.

Moreover, the movable test device 20 can sort out ToA measurements which seemed to occur due to reflections. This helps to increase the accuracy, because only line of sight measurements are valuable for the determination.

It is noted that the movable test device 20 can exemplarily detect multiple cells in parallel. The movable test device 20 can perform the processing as described above to all of said multiple cells simultaneously and/or in parallel.

It is further noted that several ones of the movable test device 20 of Fig. 2 or of the movable test device 10 of Fig. 1, respectively, with different or identical drive routes can be used, especially wherein the measurements from these movable test devices can be combined in post-processing or during the measurement.

Furthermore, the movable test device 20 of Fig. 2 or the movable test device 10 of Fig. 1, respectively, can be used during a drive or walk test and also with an airborne movable test device which is placed in a plane, drone or another flying vehicle.

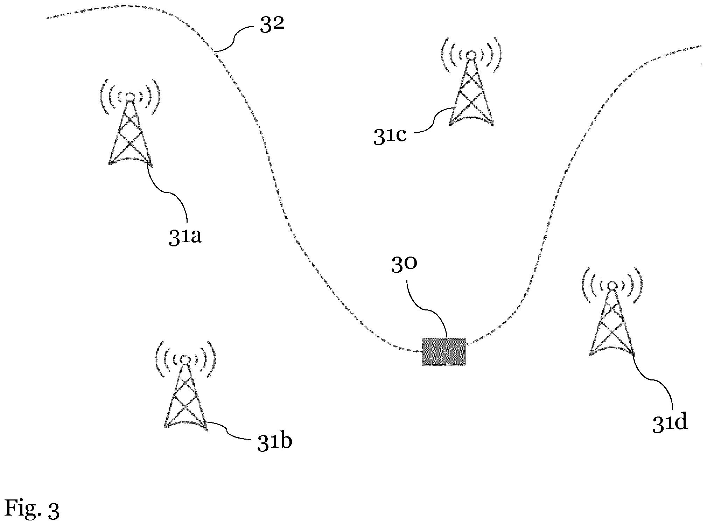

An exemplary embodiment of such a vehicle 30, especially flying vehicle, is illustrated by Fig. 3. In this exemplary case, said vehicle 30 comprises the movable test device 10 according to Fig. 1 or the movable test device 20 according to Fig. 2, respectively.

In addition to multiple cells 31a, 31b, 31c, 31d or base stations, respectively, said Fig. 3 illustrates a corresponding drive route 32 with measurement positions or measurement locations, respectively.

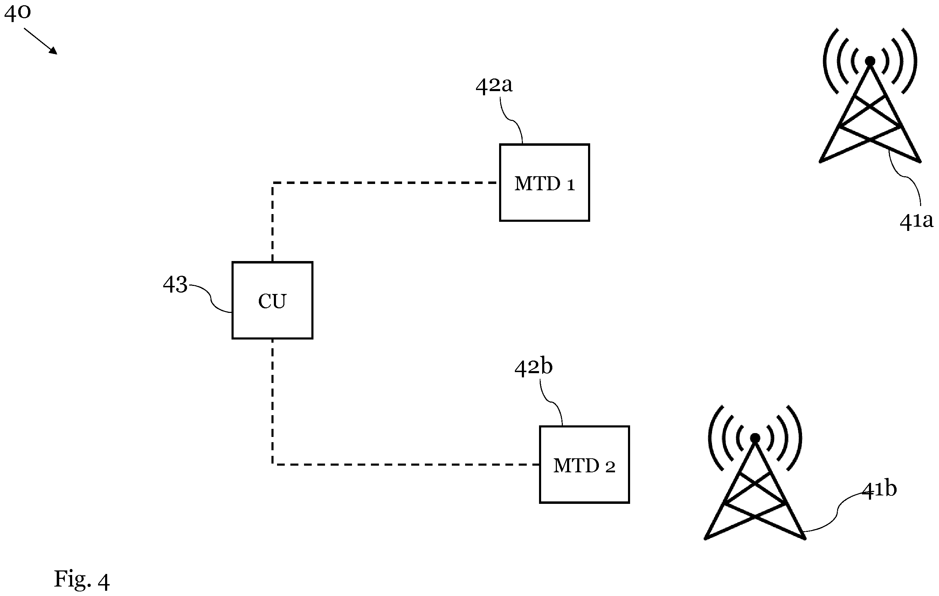

Furthermore, Fig. 4 shows an exemplary embodiment of a system 40 comprising at least two movable test devices, exemplarily a first movable test device 42a and a second movable test device 42b, and a combining unit 43 configured to combine respective measurements and/or measurement results from the at least two movable test devices or the two movable test devices 42a, 42b, respectively, in post-processing and/or real time.

Each of said movable test devices 42a, 42b can be the movable test device 10 according to Fig. 1 or the movable test device 20 according to Fig. 2, respectively.

For instance, the first movable test device 42a can be configured for testing synchronization with respect to a first base station 41a of a wireless network, whereas the second movable test device 42b can be configured for testing synchronization with respect to a second base station 41b of the wireless network.

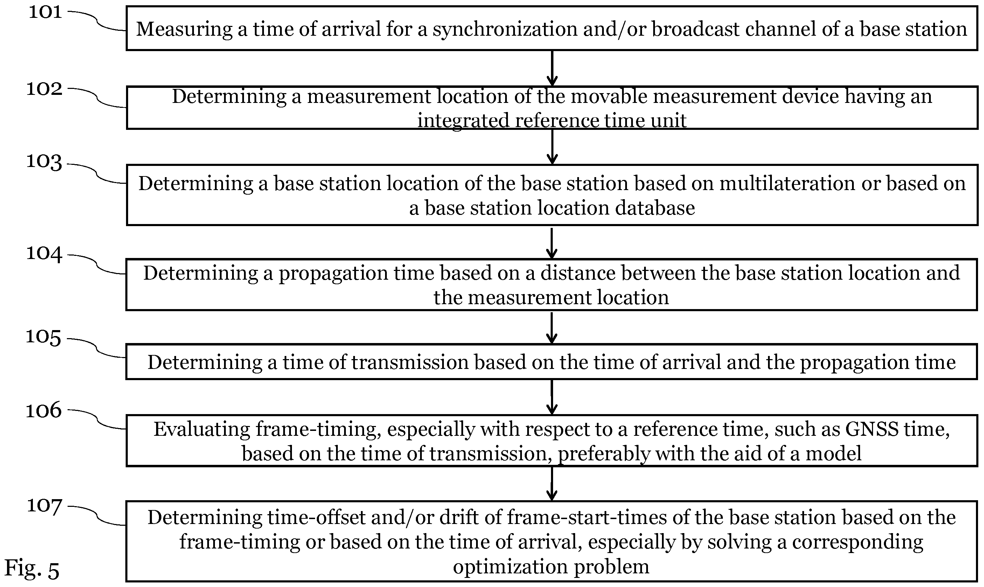

Finally, Fig. 5 depicts a flow chart of an exemplary embodiment of a method for testing synchronization with respect to a base station of a wireless network with the aid of a movable test device, such as the movable test device 10 according to Fig. 1 or the movable test device 20 according to Fig. 2, respectively, especially during movement.

In accordance with said Fig. 5, a first step 101 comprises measuring a time of arrival for a synchronization and/or broadcast channel of the base station. A second step 102 comprises determining a measurement location of the movable test device. A third step 103 comprises determining a base station location of the base station based on multilateration or based on a base station location database. A fourth step 104 comprises determining a propagation time based on a distance between the base station location and the measurement location. A fifth step 105 comprises determining a time of transmission based on the time of arrival and the propagation time. A sixth step 106 comprises evaluating frame-timing, especially with respect to a reference time, based on the time of transmission, preferably with the aid of a model. A seventh step 107 comprises determining time-offset and/or drift of frame-start-times of the base station based on the frame-timing or based on the time of arrival, especially by solving a corresponding optimization problem.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

**Claims**

1. A movable test device (10, 20, 42a, 42b) for testing, especially during movement, of the synchronization of a base station (11, 15, 21, 31a, 31b, 31c, 31d, 41a, 41b) of a wireless network with reference to a reference time , the movable test device (10, 20, 42a, 42b) comprising:

   a receiving unit (12) configured to measure a time of arrival for a synchronization and/or broadcast channel of the base station (11, 15, 21, 31a, 31b, 31c, 31d, 41a, 41b),
   a location determination unit (13) configured to determine a measurement location of the movable test device (10, 20, 42a, 42b), and configured to determine a base station location of the base station (11, 15, 21, 31a, 31b, 31c, 31d, 41a, 41b) based on multilateration or based on a base station location database, and
a processing unit (14) connected to the receiving unit (12) and to the location determination unit (13),

wherein the processing unit (14) is configured to:

   determine a propagation time based on a distance between the base station location and the measurement location,
   determine a time of transmission based on the time of arrival and the propagation time,
   evaluate frame-timing, especially with respect to a reference time, based on the time of transmission, preferably with the aid of a model, and
   determine time-offset and/or drift of frame-start-times of the base station (11, 15, 21, 31a, 31b, 31c, 31d, 41a, 41b) based on the frame-timing or based on the time of arrival, especially by solving a corresponding optimization problem.

2. The movable test device (10, 20, 42a, 42b) according to claim 1, wherein the multilateration is used to estimate the position of a base station from the time of arrival measurements, wherein preferably knowledge about the transmission periodicity is exploited, and/or wherein the location determination unit (13) is configured to store the base station location database and/or to retrieve the base station location database, especially from a remote storage, preferably a cloud storage.

3. The movable test device (10, 20, 42a, 42b) according to any of the claims 1 to 2,

   wherein the receiving unit (12) is configured to determine a base station identifier with respect to the base station (11, 15, 21, 31a, 31b, 31c, 31d, 41a, 41b), especially based on the synchronization and/or broadcast channel of the base station (11, 15, 21, 31a, 31b, 31c, 31d, 41a, 41b), and/or wherein
   the base station location database comprises or is a look-up table, especially comprising at least one base station identifier and its respectively corresponding base station location.

4. The movable test device (10, 20, 42a, 42b) according to any of the claims 1 to 3, wherein, especially for measuring the time of arrival, the receiving unit (12) is configured to receive IQ samples, especially from the base station (11, 15, 21, 31a, 31b, 31c, 31d, 41a, 41b), and to search for synchronization and/or broadcast channel signals, especially periodically repeated synchronization and/or broadcast channel signals, in the correspondingly received IQ samples.

**5.** The movable test device (10, 20, 42a, 42b) according to any of the claims 1 to 4,
wherein, for determining the time of transmission, the processing unit (14) is configured to subtract the propagation time from the time of arrival.

**6.** The movable test device (10, 20, 42a, 42b) according to any of the claims 1 to 5,
wherein for the evaluation of the frame-timing and to estimate the time offset and drift of the frame-start-times of the cell with respect to the reference time or to another time which is available at the receiver, an optimization may be used using at least one of a least squares model, a linear regression model, an iterative gradient model, a machine-learning model, or any combination thereof.

**7.** The movable test device (10, 20, 42a, 42b) according to any of the claims 1 to 6,
wherein the processing unit (14) is configured to determine a frequency error and/or timing error of the base station (11, 15, 21, 31a, 31b, 31c, 31d, 41a, 41b) with respect to a reference time such as e.g. GNSS time based on the time-offset and/or the drift of the frame-start-times of the base station (11, 15, 21, 31a, 31b, 31c, 31d, 41a, 41b).

**8.** The movable test device (10, 20, 42a, 42b) according to any of the claims 1 to 7,

   wherein the location determination unit (13) is configured to determine the measurement location with the aid of Global Navigation Satellite System, GNSS, and/or
   wherein the reference time comprises or is GNSS time.

**9.** The movable test device (10, 20, 42a, 42b) according to any of the claims 1 to 8,
wherein the receiving unit (12) is configured to measure an angle of arrival, especially with respect to the base station (11, 15, 21, 31a, 31b, 31c, 31d, 41a, 41b), preferably to support determining the base station location.

**10.** The movable test device (10, 20, 42a, 42b) according to any of the claims 1 to 9,
wherein the processing unit (14) is configured to sort the correspondingly measured time of arrival out if said correspondingly measured time of arrival is likely to be influenced and/or created by reflections.

**11.** The movable test device (10, 20, 42a, 42b) according to any of the claims 1 to 10,
wherein the receiving unit (12) and/or the processing unit (14) is configured to split all corresponding measurements with respect to the base station (11, 15, 21, 31a, 31b, 31c, 31d, 41a, 41b) into several clusters, wherein respective time-offset and/or drift is determined separately for each of said several clusters, especially wherein a respectively new cluster starts after a certain time gap between corresponding measurements or in case that the receiving unit (12) and/or processing unit (14) detects a certain change of the corresponding time-offset and/or drift.

**12.** A vehicle (30), especially flying vehicle, comprising:
a movable test device (10, 20, 42a, 42b) according to any of the claims 1 to 11.

**13.** A system (40), comprising:

   at least one, preferably at least two movable test devices (10, 20, 42a, 42b) according to any of the claims 1 to 11, and
   especially a combining unit (43) configured to combine respective measurements and/or measurement results from the at least two movable test devices (10, 20, 42a, 42b) in post-processing and/or real time.

**14.** A method for testing synchronization with respect to a base station of a wireless network with the aid of a movable test device, especially during movement, the method comprising the steps of:

   measuring (101) a time of arrival for a synchronization and/or broadcast channel of the base station,
   determining (102) a measurement location of the movable test device,
   determining (103) a base station location of the base station based on multilateration or based on a base station location database,
   determining (104) a propagation time based on a distance between the base station location and the measurement location,
   determining (105) a time of transmission based on the time of arrival and the propagation time,
   evaluating (106) frame-timing, especially with respect to a reference time, based on the time of transmission, preferably with the aid of a model, and
   determining (107) time-offset and/or drift of frame-start-times of the base station based on the frame-timing or based on the time of arrival, especially by solving a corresponding optimization problem.

Fig. 1

EP 4 787 986 A1

Fig. 2

Fig. 3

40

41a

41b

MTD 1

42a

MTD 2

42b

CU

43

Fig. 4

Fig. 5

101 — Measuring a time of arrival for a synchronization and/or broadcast channel of a base station

102 — Determining a measurement location of the movable measurement device having an integrated reference time unit

103 — Determining a base station location of the base station based on multilateration or based on a base station location database

104 — Determining a propagation time based on a distance between the base station location and the measurement location

105 — Determining a time of transmission based on the time of arrival and the propagation time

106 — Evaluating frame-timing, especially with respect to a reference time, such as GNSS time, based on the time of transmission, preferably with the aid of a model

107 — Determining time-offset and/or drift of frame-start-times of the base station based on the frame-timing or based on the time of arrival, especially by solving a corresponding optimization problem

Europäisches
Patentamt

European
Patent Office

Office européen
des brevets

## EUROPEAN SEARCH REPORT

**Application Number**

EP 25 15 5701

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y<br>A | EP 3 544 323 B1 (HUAWEI TECH CO LTD [CN])<br>17 February 2021 (2021-02-17)<br>* paragraphs [0002], [0003] *<br>* paragraph [0027] *<br>* paragraph [0037] *<br>* paragraphs [0040], [0041] *<br>* paragraphs [0064], [0066] *<br>* paragraph [0145] *<br>* paragraph [0180] *<br>* paragraphs [0209], [0210] *<br>* figures 1, 2, 14, 16 *<br>----- | 1-9,<br>12-14<br>10,11 | INV.<br>H04W56/00 |
| Y<br>A | US 2022/386262 A1 (LIBERG OLOF [SE] ET AL)<br>1 December 2022 (2022-12-01)<br>* paragraph [0053] *<br>* paragraph [0067] *<br>* paragraph [0077] *<br>* paragraphs [0238], [0219] *<br>* figure 1 *<br>* paragraph [0047] *<br>----- | 1-9,<br>12-14<br>10,11 | |
| A | US 2020/298719 A1 (KOSSEIFI MARIO [US] ET AL) 24 September 2020 (2020-09-24)<br>* paragraph [0002] *<br>* paragraph [0037] *<br>* paragraph [0064] *<br>* figures 1, 2 *<br>----- | 1-14 | **TECHNICAL FIELDS SEARCHED (IPC)**<br><br>H04W |

The present search report has been drawn up for all claims

| Place of search | Date of completion of the search | Examiner |
|---|---|---|
| The Hague | 7 July 2025 | Wijting, Carl |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 5701

07-07-2025

| Patent document cited in search report | | Publication date | Patent family member(s) | | Publication date |
|---|---|---|---|---|---|
| EP 3544323 | B1 | 17-02-2021 | CN | 109155984 A | 04-01-2019 |
| | | | EP | 3544323 A1 | 25-09-2019 |
| | | | JP | 6820427 B2 | 27-01-2021 |
| | | | JP | 2020515105 A | 21-05-2020 |
| | | | KR | 20190099271 A | 26-08-2019 |
| | | | US | 2019320403 A1 | 17-10-2019 |
| | | | WO | 2018119761 A1 | 05-07-2018 |
| US 2022386262 | A1 | 01-12-2022 | EP | 4046432 A1 | 24-08-2022 |
| | | | US | 2022386262 A1 | 01-12-2022 |
| | | | WO | 2021076037 A1 | 22-04-2021 |
| US 2020298719 | A1 | 24-09-2020 | US | 2018292844 A1 | 11-10-2018 |
| | | | US | 2020298719 A1 | 24-09-2020 |
| | | | US | 2022118870 A1 | 21-04-2022 |

**REFERENCES CITED IN THE DESCRIPTION**

**Patent documents cited in the description**

- US 20230073766 A